# Europäisches Patentamt
# European Patent Office
# Office européen des brevets

(19)

(11) Veröffentlichungsnummer: **0 127 800**
**B1**

(12) **EUROPÄISCHE PATENTSCHRIFT**

(45) Veröffentlichungstag der Patentschrift:
23.06.89

(51) Int. Cl.⁴: **B 60 S 11/00**

(21) Anmeldenummer: **84105339.0**

(22) Anmeldetag: **11.05.84**

(54) Verfahren zum Bestücken eines Behältnisses mit Fahrzeugen.

(30) Priorität: **04.06.83 DE 3320332**

(43) Veröffentlichungstag der Anmeldung:
**12.12.84 Patentblatt 84/50**

(45) Bekanntmachung des Hinweises auf die Patenterteilung:
**23.06.89 Patentblatt 89/34**

(84) Benannte Vertragsstaaten:
**AT BE DE FR GB IT SE**

(56) Entgegenhaltungen:
**GB-A-2 106 046**
**US-A-3 297 338**
**US-A-3 580 627**
**US-A-4 036 379**

(73) Patentinhaber: **DEERE & COMPANY, 1 John Deere Road, Moline Illinois 61265 (US)**

(72) Erfinder: **Herr, Friedhelm, Schriesheimer Strasse 2a, D-6805 Heddesheim (DE)**

(74) Vertreter: **Feldmann, Bernhard, DEERE & COMPANY European Office, Patent Department Steubenstrasse 36- 42 Postfach 503, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft ein Verfahren zum Bestücken eines auf Straße, Schiene und/oder Wasser beförderbaren Behältnisses mit mindestens einem fahrbaren Fahrzeug, das auf Rädern angeordnet ist.

Bei diesem Verfahren werden fahrbereite Fahrzeuge, wie z. B. Ackerschlepper, zu Versandzwecken in ein Behältnis in der Art eines Containers, eines Schiffsladeraums, einer LKW-Ladefläche oder dergleichen mittels ihres eigenen Fahrantriebes gefahren. Dort verbleiben diese Fahrzeuge unverändert, damit sie bei der Ankunft am Zielort reibungslos und ohne Zeitverlust wieder entladen werden können.

Dieses Verfahren ist jedoch nur für den Versand relativ niedrig gebauter Fahrzeuge wie beispielsweise Ackerschleppern ohne Fahrerkabine oder Umsturzbügel geeignet. Ist jedoch ein Fahrzeug mit einem derartigen Aufbau versehen, dann muß dieser Aufbau abgebaut und separat verschickt werden. Mit dem Abbau der Fahrerkabine ist aber auch zwangsläufig die Demontage der Bedienungselemente für einen Verbrennungsmotor und ein Getriebe verbunden, und das Fahrzeug kann nicht mehr durch seinen eigenen Antrieb in das Behältnis gefahren werden. Die zunehmenden Außenabmessungen heutiger Ackerschlepper mit einer Leistung von ca. 70 kW und mehr führen außerdem dazu, daß diese sogar ohne jeglichen Aufbau zum Einfahren in ein Behältnis zu hoch sind. Die Verwendung größerer das Fahrzeug mühelos aufnehmender Behältnisse führt jedoch zu höheren Versandkosten, die unter anderem auch dadurch entstehen, daß zwischen den jeweiligen Fahrzeugen Zwischenräume verbleiben, die nicht ausgenutzt werden können.

Die mit der Erfindung zu lösende Aufgabe wird darin gesehen, das Verfahren zum Bestücken eines Behältnisses mit Fahrzeugen derart zu optimieren, daß möglichst viele Fahrzeuge in dem Behältnis eingestellt werden können.

Diese Aufgabe ist gemäß Patentanspruch 1, durch die im Kennzeichen des Anspruches 1 enthaltenen Merkmale gelöst worden. Auf diese Weise wird die Höhe des Fahrzeuges, die ja beim Einfahren in das Behältnis entscheidend ist, auf ein Minimum reduziert, wobei die Fahrbarkeit des Fahrzeuges jedoch nicht verlorengeht. Es kann vielmehr der Durchmesser der Hilfsräder so gewählt werden, daß eine Demontage von Komponenten wie etwa die Fahrerkabine überflüssig wird, die die Höhe des Fahrzeuges ausmachen. Somit bleiben auch alle für die Fahrtüchtigkeit des Fahrzeuges erforderlichen Elemente am Fahrzeug erhalten. Die gedrungene Bauweise des Fahrzeuges erbringt nun einen höheren Ausnutzungsgrad des in dem Behältnis zur Verfügung stehenden Volumens, und der Vorteil der einfachen und schnellen Entladung bleibt erhalten.

Eine sehr rasche Bestückung bzw. Entladung des Behältnisses mit selbstfahrenden Fahrzeugen wird erreicht, wenn zumindest eines der Hilfsräder über einen am Fahrzeug vorgesehenen Antrieb antreibbar ist. Dadurch ist es ohne zusätzliche Mittel, die die Bewegung des Fahrzeuges beim Bestücken besorgen, möglich, das Fahrzeug in das Behältnis einzufahren, was auch keinen zusätzlichen Aufwand bedeutet, da der Antrieb des Fahrzeuges ohnehin vorhanden ist. Die Verladung von eine rückwärtige Treibachse aufweisenden Fahrzeugen erweist sich dann als einfach und zeitsparend, wenn zwei Hilfsräder mit der rückwärtigen Treibachse verbunden sind, was zudem nur eines Auswechselns der normalerweise aufgesteckten Treibräder gegen die Hilfsräder bedarf.

Da bei mit einer Vorderachse ausgerüsteten Fahrzeugen diese normalerweise die Breite des Fahrzeuges an seinem vorderen Ende bestimmt, wird eine wesentliche Reduzierung des von diesem Fahrzeug benötigten Raumes unter Beibehaltung der Fahrtauglichkeit erreicht, indem die Vorderachse abgebaut und durch mindestens ein horizontal schwenkbares Hilfsrad ersetzt wird. Dieses schwenkbare Hilfsrad steht einer Lenkbewegung des Fahrzeuges nicht entgegen. Beim Bestücken des Behältnisses mit selbstfahrenden Fahrzeugen, die nach Abbau der Vorderachse in ihrem Grundriß eine T-Form einnehmen und die Einzelradbremsen für Treibräder aufweisen, erfolgt eine problemlose Umrüstung in den versandfertigen Zustand und ein optimales Aneinanderreihen der Fahrzeuge in dem Behältnis dadurch, daß das horizontal schwenkbare Hilfsrad an die Frontseite des Fahrzeuges anschraubbar und das Fahrzeug durch Betätigung der Einzelradbremsen lenkbar ist.

Wenn die Fahrzeuge Ackerschlepper mit einer Bedienungszelle sind, die Unterlenker aufweisen und die an ihrer Frontseite mit einem abschraubbaren Grundgewicht versehen sind, dann erfolgt die beste Ausnutzung der bereits am Ackerschlepper vorhandenen Komponenten dadurch, daß die abgebaute Vorderachse nach Abnahme der Vorderräder auf die Unterlenker auflegbar und mit diesen verbindbar ist sowie das horizontal schwenkbare Hilfsrad einen Rahmen aufweist, der an den Befestigungsstellen für das Grundgewicht am Ackerschlepper anschraubbar ist. Außerdem kann eine weitere Verringerung des Platzbedarfs dann erreicht werden, wenn die Vorderräder gleichzeitig als Hilfsräder, die auf der Treibachse befestigt werden, Verwendung finden. Der Ackerschlepper kann also in den versandfertigen Zustand gebracht werden, indem ausschließlich bereits vorhandene Vorkehrungen genutzt werden.

Je nach den gegebenen Abmessungen des Ackerschleppers bzw. des Behältnisses kann es nach einem weiteren Merkmal des erfindungsgemäßen Verfahrens von Vorteil sein, wenn die Ackerschlepper in dem Behältnis nach dem Einfahren in Richtung auf eine Seitenwand verschwenkt abgestellt werden und die vorderen Enden von mindestens zwei Ackerschleppern nebeneinander liegen. Nach diesem Merkmal verstaute Ackerschlepper können soweit aufeinander zugefahren werden, daß das jeweils vordere Ende und die Hilfsräder zweier sich gegenüberstehender Ackerschlepper sich berühren, woraus sich eine sehr kurze Gesamtlänge zweier in Reihe stehender Ackerschlepper ergibt.

Dadurch, daß nach dem Abstellen je eines Ackerschleppers noch vorhandene Freiräume in dem Behältnis mit abgebauten Komponenten befüllbar sind und abwechselnd ein Ackerschlepper rückwärts und der nächste vorwärts in das Behältnis eingefahren werden, ergibt sich noch eine weitere Ausnutzung des in dem Behältnis zur Verfügung stehenden Volumens, wodurch die Kosten-Volumen- bzw. die Kosten-Gewicht-Relation immer günstiger wird.

Eine weitere Kostenersparnis kann erreicht werden, wenn das horizontal schwenkbare Hilfsrad von dem im Behältnis abgestellten Ackerschlepper abbaubar ist, da das horizontal schwenkbare Hilfsrad von dem Ackerschlepper, der soeben in das Behältnis eingefahren wurde, entfernt und an den nächsten Ackerschlepper angebaut werden kann.

In der Zeichnung ist ein Ackerschlepper und ein Behältnis dargestellt, anhand derer ein erfindungsgemäßes Verfahren zum Bestücken des Behältnisses beschrieben wird. Es zeigt:

Fig. 1 einen Ackerschlepper in Seitenansicht,
Fig. 2 den Ackerschlepper in versandfertigem Zustand, ebenfalls in Seitenansicht,
Fig. 3 eine Draufsicht von mehreren in dem Behältnis angeordneten Ackerschleppern in versandfertigem Zustand,
Fig. 4 eine Seitenansicht der in dem offen dargestellten Behältnis verstauten Ackerschlepper in versandfertigem Zustand.

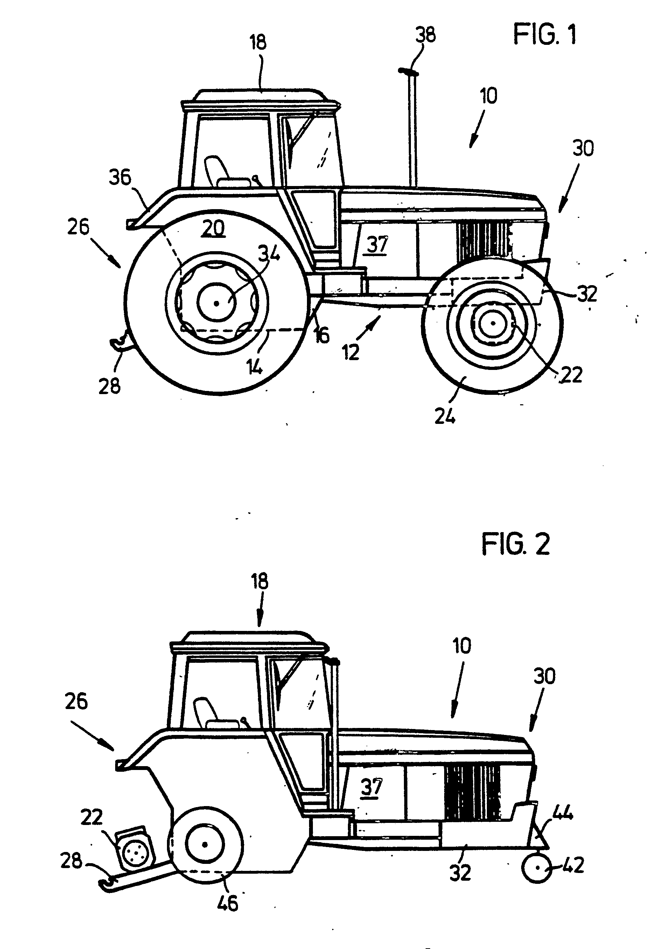

Der in Fig. 1 dargestellte betriebsbereite Ackerschlepper 10 besteht im wesentlichen aus einem Chassis 12, dessen unterste Kante 14 von einem strichliniert gezeichneten Getriebegehäuse 16 gebildet wird, einer Bedienungszelle in Form einer Fahrerkabine 18, rückwärtigen gummibereiften Rädern 20 und aus zwei an einer nur angedeuteten Trag- oder Vorderachse 22 montierten gummibereiften lenkbaren Vorderrädern 24, die auf die gleiche Spurweite wie die der rückwärtigen Räder 20 eingestellt sind. Dabei werden die rückwärtigen Räder 20 über ein sich in dem Getriebegehäuse 16 befindliches nicht erkennbares Getriebe, das von der Fahrerkabine 18 aus schaltbar ist, angetrieben. Ferner weist der Ackerschlepper 10 an seinem rückwärtigen Ende 26 Unterlenker 28 und an seinem vorderen Ende 30 einen in Fig. 1 ebenfalls nur strichliniert gezeichneten Vorderachsbock 32 auf, an den ein nicht gezeigtes Grundgewicht anschraubbar ist. Die auf einer Hinterachswelle 34 montierten rückwärtigen Räder 20 werden von Kotflügeln 36 teilweise abgedeckt. Letztlich erstreckt sich vor der Fahrerkabine 18 ein auf einen nicht gezeigten Abgasstutzen eines das Getriebe antreibenden Verbrennungsmotors 37 auf steckbares, leicht lösliches Auspuffrohr 38 nach oben.

Dieser Ackerschlepper 10 weist eine Länge von ca. 4,2 m auf, wobei als vorderster Bezugspunkt die Vorderkante der Vorderräder 24 und als rückwärtigster Bezugspunkt die rückwärtigste Kante der Unterlenker 28 in abgesenktem Zustand angenommen wurde. Seine Breite beträgt ca. 2,05 m gemessen von den Außenkanten der rückwärtigen Kotflügel 36. Die Höhe beträgt von der Aufstandsfläche bis zur Oberkante der Fahrerkabine 18 ca. 2,84 m und bis zur Oberkante des Auspuffrohrs 38 ca. 3,04 m. Diese Maße beziehen sich auf einen Ackerschlepper mit einer Motorleistung von 71 kW und einem Verbrennungsmotor mit sechs Zylindern.

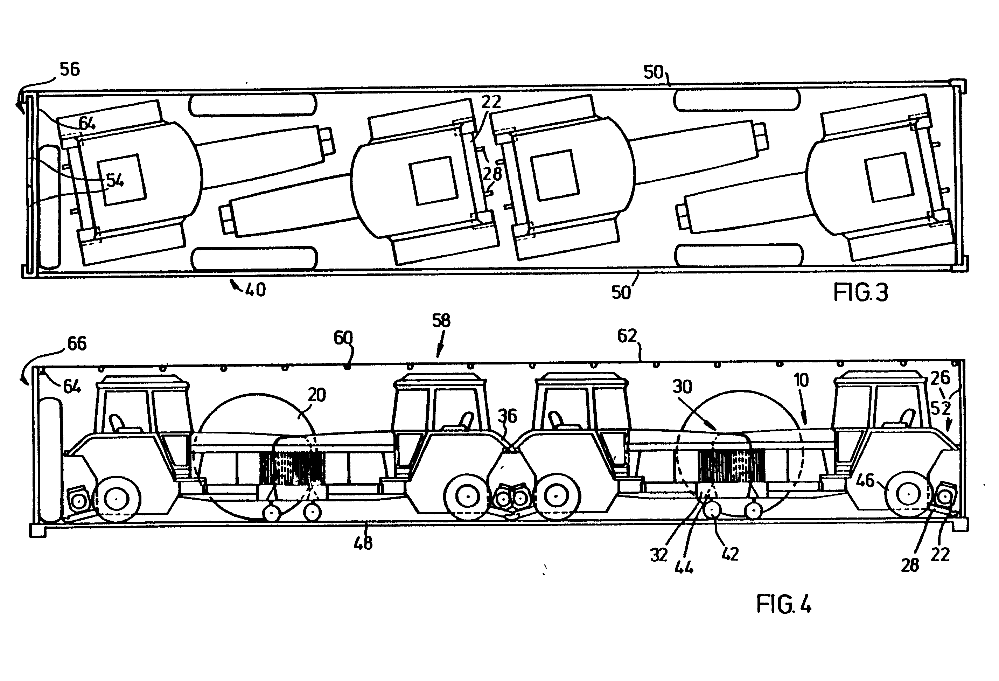

Um möglichst viele Ackerschlepper 10 dieser Größenordnung in einem Behältnis in Form eines standardisierten sogenannten 40 ft (12,19 m) Open Top Container 40, dessen Umrisse aus Fig. 3 und Fig. 4 entnehmbar sind, mit einer lichten Breite von 2,33 m, einer lichten Höhe von 2,37 m und einer lichten Länge von 12,01 m unterbringen zu können, wird jeder in den in Fig. 2 dargestellten Zustand umgerüstet, der nachfolgend als der versandfertige bezeichnet ist.

Es handelt sich dabei um einen herkömmlichen Container mit einem Boden 48, Seitenwänden 50, einer Rückwand 52, einer aus zwei schwenkbaren Türen 54 bestehenden Vorderwand 56 und mit einem offenen Dach 58. Das Dach 58 selbst besteht aus Querstreben 60 und einer auf diesen aufgelegten Plane 62, die vor dem Eindringen von Wasser, Schnee und Schmutz schützt. Über den Türen 54 erstreckt sich ein Balken 64, der während des Bestückens und des Entladens des Containers 40 entfernt werden kann, um somit eine normalerweise von der Oberkante des Bodens 48, den Seitenwänden 50 und dem Balken 64 umrissene Einlaßöffnung 66 um das Höhenmaß des Balkens 64 zu vergrößern. Derartige Container 40 sind für den Transport auf der Straße, der Schiene und auf dem Wasser geeignet, wobei sie auf den Schiffen übereinandergestapelt werden können.

Der in Fig. 2 dargestellte Ackerschlepper 10 unterscheidet sich von dem komplettierten und einsatzbereiten Ackerschlepper 10 nach Fig. 1 lediglich dadurch, daß er an seinem vorderen Ende 30 anstatt auf der Vorderachse 22 und den Vorderrädern 24 auf einem horizontal frei schwenkbaren Hilfs oder Stützrad 42 getragen wird, das über einen Rahmen 44 mit dem Vorderachsbock 32 des Ackerschleppers 10 verbunden ist, und daß die rückwärtigen Räder 20 durch im Außendurchmesser wesentlich kleinere Hilfsräder 46 aus Stahl oder Guß ersetzt wurden, wobei die Fahrfähigkeit und eine gewisse Lenkfähigkeit des Ackerschleppers 10 aber erhalten bleiben. Die Abmessungen des Stützrades 42 bzw. des Rahmens 44 und der Hilfsräder 46 sind dabei so getroffen, daß der Ackerschlepper 10 auch während seiner Unterbringung in dem Behältnis 40 wie dem vorbeschriebenen Open Top Container eine waagrechte oder zumindest annähernd waagrechte Stellung behält und seine Höhe auf ein Maß reduziert wird, das geringer ist als die Einlaßhöhe des Behältnisses 40. Der Ackerschlepper 10 muß seine waagrechte oder annähernd waagrechte Stellung beibehalten, damit sich im Verbrennungsmotor und dem Getriebe befindliches Schmieröl nicht von dem Ansaugstutzen dort eingebauter nicht gezeigter Ölpumpen wegbewegt, wodurch die Funktionsfähigkeit dieser Aggregate nicht mehr gewährleistet wäre. Es ist jedoch darauf zu achten, daß auch im Versandzustand des Ackerschleppers 10 zwischen der untersten Kante 14 des Getriebegehäuses 16 und der Aufstandsfläche noch ein Freiraum von ca. 1 bis 2 cm verbleibt, um Beschädigungen des Getriebegehäuses 16 infolge über der Aufstandsfläche vorstehender Schwellen, Schienen, Torhalterungen usw. zu vermeiden. Außerdem ist die Vorderachse 22 in komplettiertem Zustand, jedoch ohne die Vorderräder 24, auf den Unterlenkern 28 quer zur Längsachse des Ackerschleppers befestigt.

Um den Ackerschlepper 10 aus dem betriebsbereiten und in Fig. 1 gezeigten in den versandfertigen und in Fig. 2 dargestellten Zustand zu versetzen, sind folgende Schritte erforderlich:

- der Ackerschlepper 10 wird an seinem vorderen Ende 30 mittels eines Krans oder einer sonstigen Hebevorrichtung angehoben,
- die Vorderräder 24 werden demontiert,
- die Vorderachse 22 wird von dem Vorderachsbock 32 getrennt, beispielsweise durch Lösen eines nicht gezeigten, die Vorderachse 22 mit dem Vorderachsbock 32 verbindenden Bolzens, der Rahmen 44 mit dem Stützrad 42 wird an dem Vorderachsbock 32 befestigt, beispielsweise angeschraubt, wobei zweckmäßigerweise die sowieso vorhandenen Bohrlöcher zum Anschrauben des Grundgewichtes Verwendung finden,
- der Ackerschlepper 10 wird mit seinem Stützrad 42 auf die Aufstandsfläche abgelassen,
- das rückwärtige Ende 26 des Ackerschleppers 10 wird mittels eines Krans oder einer sonstigen Hebevorrichtung angehoben,
- die rückwärtigen Räder 20 werden demontiert,
- die Hilfsräder 46 werden auf die Hinterachswelle 34 aufgesteckt und dort befestigt,
- das rückwärtige Ende 26 des Ackerschleppers 10 wird mit den Hilfsrädern 46 auf die Aufstandsfläche abgelassen,
- die Vorderachse 22 wird auf die Unterlenker 28 quer zur Längsachse des Ackerschleppers 10 aufgelegt und dort gegen Herabfallen gesichert und
- das nach oben heraus ragende Auspuffrohr 38 wird abgenommen und an dem Chassis 12 in geeigneter Weise befestigt.

Selbstverständlich kann der Ackerschlepper 10 auch gleichzeitig an seinem vorderen und seinem rückwärtigen Ende 30 und 26 bzw. zuerst das rückwärtige Ende 26 und dann das vordere Ende 30 angehoben werden.

In dem versandfertigen Zustand weist der Ackerschlepper 10 an seinem vorderen Ende 30 nur noch eine Breite entsprechend der Breite des Chassis 12 auf, die jedoch wesentlich geringer ist als die Breite des gesamten Ackerschleppers 10 mit der Vorderachse 22 und den Vorderrädern 24, woraus sich mit dem rückwärtigen Ende 26 eine T-Form ergibt. An den Bedienungs und Antriebskomponenten des Ackerschleppers 10 werden dabei keine Änderungen vorgenommen, so daß der Ackerschlepper 10 nah wie vor fahrbereit ist und in das bzw. aus dem Behältnis 40 aus eigener Kraft gefahren werden kann. Die Lenkfähigkeit bleibt dadurch erhalten, daß nach Abbau der lenkbaren Vorderräder 24 die Fahrtrichtung des Ackerschleppers 10 nicht mehr über diese, sondern durch in der Zeichnung nicht ersichtliche, auf jeweils nur ein rückwärtiges Rad 20 wirkende Einzelradbremsen bestimmt wird, d. h. die Bedienungsperson muß die Einzelradbremsen entsprechend betätigen. Es ist darauf hinzuweisen, daß die Bremsen nicht auf die rückwärtigen Räder 20, sondern auf die Hinterachswellen 34 wirken. Das Ausladen des Behältnisses 40 erfolgt analog dem Vorbeschriebenen, jedoch in umgekehrter Reihenfolge.

Die sich aus dieser Umrüstung in den versandfertigen Zustand ergebende T-Form des Ackerschleppers 10 ermöglicht es, daß mehrere Ackerschlepper 10 in versetzter Anordnung, wie aus Fig. 3 zu ersehen ist, in dem Behältnis 40 untergebracht werden können und daß das zur Verfügung stehende Volumen des Behältnisses 40 voll ausgenutzt werden kann. Dennoch zwischen den einzelnen Ackerschleppern 10 verbleibende Zwischenräume werden mit den Vorder- und/oder rückwärtigen Rädern 24 bzw. 20 soweit als möglich ausgefüllt, wobei eventuell noch übrigbleibende Vorder- oder rückwärtige Räder 24 bzw. 20 in geeigneten kleineren Behältnissen versandt werden können.

Sofern es von den gegebenen Abmessungen und der Tragfähigkeit der Vorderräder 24 her möglich ist, können anstatt der Hilfsräder 46 aus Stahl oder Guß auch die Vorderräder 24, falls erforderlich über Adapter, auf den Hinterachswellen 34 befestigt werden, wodurch zusätzlicher Raum für die Unterbringung restlicher abgebauter Komponenten gewonnen und eine weitere Versandkostenreduzierung durch den Wegfall der Hilfsräder 46 aus Stahl oder Guß erzielt wird.

Selbstverständlich ist dieses Verfahren nicht auf die Anwendung bei Ackerschleppern begrenzt, sondern es kann bei allen Fahrzeugen angewandt werden, die durch Wegnahme von nicht unbedingt zum Fahren aus eigener Kraft benötigten Komponenten bzw. deren Austausch gegen funktionsgleiche oder funktionsähnliche Komponenten kleinerer Abmessungen auf eine Außenform gebracht werden können, die es ermöglicht, diese Fahrzeuge in ein Behältnis einzufahren und dort so gegeneinander versetzt anzuordnen, daß das vorhandene Volumen optimal genutzt wird. Beispiele hierfür sind selbstfahrende Feldhäcksler, Mähdrescher kleinerer Bauart, selbstfahrende Schwadmäher, Straßenhobel u. v. a.

Aus den Figuren 3 und 4 ist ersichtlich, wie vier Ackerschlepper mit den zuvor angegebenen Maßen in einen Open Top Container gemäß den angegebenen Abmessungen am vorteilhaftesten untergebracht werden können. Zum Bestücken des Containers 40 gemäß Fig. 3 und Fig. 4 wird der erste Ackerschlepper 10 rückwärts gerade bis zu der Rückwand 52 eingefahren und kurz vor dem Anstoßen an diese durch Betätigen der rechten Einzelradbremse vorne nach links verschwenkt, und zwar soweit, daß gerade noch ein rückwärtiges Rad 20 zwischen das vordere Ende 30 und die Seitenwand 50 paßt. Ein zweites rückwärtiges Rad 20 wird gegen die gegenüberliegende Seitenwand 50 nahe der Fahrerkabine 18 gestellt. Daraufhin wird der zweite Ackerschlepper 10 vorwärts bis zum rechten rückwärtigen Kotflügel 36 des ersten Ackerschleppers 10 eingefahren, wozu er beim Erreichen dessen vorderen Endes 30 leicht vorne nach rechts geschwenkt werden muß. Ein dritter und vierter Ackerschlepper 10 werden dann wie der erste und zweite eingefahren, wobei das rückwärtige Ende 26 des zweiten Ackerschleppers 10 wie die Rückwand 52 betrachtet wird. Letztlich wird zwischen dem rückwärtigen Ende 26 des vierten Ackerschleppers 10 und den schwenkbaren Toren 54 nochmals ein rockwärtiges Rad 20 verstaut.

Die Angaben rechts und links beziehen sich auf die Blickrichtung von der Rückwand 52 zu der Vorderwand 56.

Selbstverständlich ist dieses Verfahren nicht auf die Anwendung bei Behältnissen und Ackerschleppern der vorgenannten Abmessungen begrenzt, sondern es ist auch möglich, weniger Ackerschlepper, z. B. zwei, in ein kleineres Behältnis wie einen 20 ft (6,05 m) Container zu verladen. Außerdem müssen die Ackerschlepper nicht gegeneinander versetzt in dem Behältnis angeordnet sein, sondern können sich mit ihren vorderen Enden gegenüberstehen, wobei der entstehende Freiraum von den Vorder- oder rückwärtigen Rädern ausgefüllt werden kann.

## Patentansprüche

1. Verfahren zum Bestücken eines auf Straße, Schiene und/oder Wasser beförderbaren Behältnisses mit mindestens einem fahrbare Fahrzeug, das auf Rädern angeordnet ist, dadurch gekennzeichnet, daß das Fahrzeug durch Ersatz seiner Räder (20, 24) durch mit kleinerem Durchmesser, auf eine Höhe abgesenkt wird, die ein Einfahren des Fahrzeugs in versandfertigem Zustand in das Behältnis zuläßt.

2. Verfahren zum Bestücken eines Behältnisses nach Anspruch 1 mit selbstfahrenden Fahrzeugen, dadurch gekennzeichnet, daß zumindest eines der Hilfsräder (42, 46) über einen am Fahrzeug (10) vorgesehenen Antrieb antreibbar ist.

3. Verfahren zum Bestücken eines Behältnisses nach Anspruch 1 oder 2 mit eine rückwärtige Treibachse aufweisenden selbstfahrenden Fahrzeugen, dadurch gekennzeichnet, daß zwei Hilfsräder (46) mit der rückwärtigen Treibachse (34) verbunden sind.

4. Verfahren zum Bestücken eines Behältnisses nach einem der vorherigen Ansprüche mit eine Vorderachse aufweisenden selbstfahrenden Fahrzeugen, dadurch gekennzeichnet, daß die Vorderachse (22) abgebaut und durch mindestens ein horizontal schwenkbares Hilfsrad (42) ersetzt wird.

5. Verfahren zum Bestücken eines Behältnisses nach einem der vorherigen Ansprüche mit selbstfahrenden Fahrzeugen, die nach Abbau der Vorderachse in ihrem Grundriß eine T-Form einnehmen und die Einzelradbremsen für Treibräder aufweisen, dadurch gekennzeichnet, daß das horizontal schwenkbare Hilfsrad (42) an die Frontseite (32) des Fahrzeuges (10) anschraubbar und das Fahrzeug durch Betätigung der Einzelradbremsen lenkbar ist.

6. Verfahren zum Bestücken eines Behältnisses nach einem der vorherigen Ansprüche mit eine Bedienungszelle aufweisenden Ackerschleppern, die Unterlenker aufweisen und die an ihrer Frontseite (32) mit einem abschraubbaren Grundgewicht versehen sind, dadurch gekennzeichnet, daß die abgebaute Vorderachse (22) nach Abnahme der Vorderräder (24) auf die Unterlenker (28) auflegbar und mit diesen verbindbar ist sowie das horizontal schwenkbare Hilfsrad (42) einen Rahmen (44) aufweist, der an den Befestigungsstellen für das Grundgewicht am Ackerschlepper (10) anschraubbar ist.

7. Verfahren zum Bestücken eines Behältnisses mit Ackerschleppern, nach Anspruch 6, dadurch gekennzeichnet, daß die Ackerschlepper (10) in dem Behältnis (40) nach dem Einfahren in Richtung auf eine Seitenwand (50) verschwenkt abgestellt werden.

3. Verfahren zum Bestücken eines Behältnisses mit Ackerschleppern nach Anspruch 7, dadurch gekennzeichnet, daß die vorderen Enden (30) von mindestens zwei Ackerschleppern (10) nebeneinander liegen.

9. Verfahren zum Bestücken eines Behältnisses mit Ackerschleppern nach den Ansprüchen 6 bis 8, dadurch gekennzeichnet, daß nach dem Abstellen je eines Ackerschleppers (10) noch vorhandene Freiräume in dem Behältnis mit abgebauten Komponenten (20, 24) befüllbar sind.

10. Verfahren zum Bestücken eines Behältnisses mit Ackerschleppern nach den Ansprüchen 6 bis 8, dadurch gekennzeichnet, daß abwechselnd ein Ackerschlepper (10) rückwärts und der nächste vorwärts in das Behältnis (40) eingefahren werden.

11. Verfahren zum Bestücken eines Behältnisses mit Ackerschleppern nach einem der vorherigen Ansprüche, dadurch gekennzeichnet, daß das horizontal schwenkbare Hilfsrad (42) von dem im Behältnis (40) abgestellten Ackerschlepper (10) abbaubar ist.

## Claims

1. Method of loading a container transportable on the road, skids and/or water with at least one drivable vehicle, which is arranged on wheels, characterized in that the vehicle (10) is lowered by replacement of its wheels (20, 24) by auxiliary wheels (42, 46) with smaller diameter, which permits driving of the vehicle ready for shipment into the container.

2. Method of loading a container according to claim 1 with self-driven vehicles, characterized in that at least one of the auxiliary wheels (42, 46) is drivable by a drive provided on the vehicle (10).

3. Method of loading a container according to claim 1 or 2 with a self-driven vehicle having a rear driven axle, characterized in that two auxiliary wheels (46) are connected to the rear driven axle (34).

4. Method of loading a container according to one of the preceding claims with a self-driven vehicle having a front axle, characterized in that the front axle (22) is dismounted and replaced by at least ode horizontally pivotable auxiliary wheel (42).

5. Method of loading a container according to one or the preceding claims with self-driven vehicles which, after dismounting the front axle, have a T-shape in ground plan and have the single wheel brakes for driven wheels, characterized in that the horizontally pivotable auxiliary wheel (42) can be screwed to the front side (32) of the vehicle (10) and the vehicle can be steered by operation of the single wheel brakes.

6. Method of loading a container according to one of the preceding claims with an agricultural tractor having an operator cab, which has lower links and which is provided at its front side (32) with a ground weight which can be unscrewed, characterized in that the dismounted front axle (22) can be fitted on the lower links (28) after removing the front wheels (24), and in that the horizontally pivotable auxiliary wheel (42) has a frame (44) which can be screwed on to the fixing points for the ground weight on the agricultural tractor (10).

7. Method of loading a container with agricultural tractors according to claim 6, characterized in that the agricultural tractors (10) are placed after driving into the container (40) turned towards one side wall (60).

8. Method of loading a container with agricultural tractors according to claim 7, characterized in that the front ends (30) of at least two agricultural tractors (10) lie beside each other.

9. Method of loading a container with agricultural tractors according to claims 6 to 8, characterized in that, after putting each agricultural tractor (10) in, available free space in the container can be filled with disassembled components (20, 24).

10. Method of loading a container with agricultural tractors according to claims 6 to 8, characterized in that agricultural tractors (10) are driven into the container (40) alternately backwards and the next forwards.

11. Method of loading a container with agricultural tractors according to one of the preceding claims, characterized in that the horizontally pivotable auxiliary wheel (42) can be dismounted from the agricultural tractor (10) placed in the container (40).

## Revendications

1. Procédé pour charger un réceptacle pouvant être acheminé sur route, sur rail et/ou sur l'eau avec au moins un véhicule mobile monté sur roues, caractérisé en ce que le véhicule (10) peut, par remplacement de ses roues (20, 24) par des roues auxiliaires (42, 46) de plus petit diamètre être abaissé jusqu'à une hauteur permettant la pénétration dans le réceptacle du véhicule à l'état prêt à l'expédition.

2. Procédé pour charger un réceptacle suivant la revendication 1 avec des véhicules automoteurs, caractérisé en ce que l'une au moins des roues auxiliaires (42, 46) peut être entraînée par l'intermédiaire d'un dispositif d'entraînement prévu sur le véhicule (10).

3. Procédé pour charger un réceptacle suivant la revendication 1 ou 2 avec des véhicules automoteurs comportant un essieu moteur arrière, caractérisé en ce que deux roues auxiliaires (46) sont reliées à l'essieu moteur arrière (34).

4. Procédé pour charger un réceptacle suivant l'une des revendications précédentes avec des véhicules automoteurs comportant un essieu avant, caractérisé en ce qu'on démonte l'essieu avant (22) et on le remplace par au moins une roue auxiliaire (42) pouvant pivoter horizontalement.

5. Procédé pour charger un réceptacle suivant l'une des revendications précédentes avec des véhicules automoteurs qui, après démontage de l'essieu avant, prennent en plan un contour en forme de T et qui comportent des freins de roues individuels pour les roues motrices, caractérisé en ce que la roue auxiliaire (42) pouvant pivoter horizontalement peut être rapportée par vissage sur le côté avant (32) du véhicule (10), et en ce que le véhicule peut être dirigé par l'actionnement des freins de roues individuels.

6. Procédé pour charger un réceptacle suivant l'une des revendications précédentes avec des tracteurs agricoles comportant une cellule ou cabine de manoeuvre, présentant des barres inférieures et équipés sur leur côté avant (32) d'un contrepoids de base pouvant être déposé par dévissage, caractérisé en ce que l'essieu avant démonté (22) peut, après enlèvement des roues avant (24), être déposé sur les barres inférieures (28) et relié à celles-ci, et en ce que la roue auxiliaire (42) pouvant pivoter horizontalement comporte un bâti (44) qui peut être rapporté par vissage sur les points de fixation du contrepoids de base sur le tracteur agricole (10).

7. Procédé pour charger un réceptacle avec des tracteurs agricoles suivant la revendication 6, caractérisé en ce que les tracteurs agricoles (10) sont déposés dans le réceptacle (40), après leur pénétration, dans une position de pivotement en direction d'une paroi latérale (50).

8. Procédé pour charger un réceptacle avec des tracteurs agricoles suivant la revendication 7, caractérisé en ce que les extrémités avant (30) d'au moins deux tracteurs agricoles (10) sont placées l'une à côté de l'autre.

9. Procédé pour charger un réceptacle avec des tracteurs agricoles suivant les revendications 6 à 8, caractérisé en ce que, après dépose chaque fois d'un tracteur agricole (10), les espaces libres encore présents dans le réceptacle peuvent être remplis avec des éléments démontés (20, 24).

10. Procédé pour charger un réceptacle avec des tracteurs agricoles suivant les revendications 6 à 8, caractérisé en ce qu'on fait pénétrer alternativement un tracteur agricole (10) en marche arrière et le suivant en marche avant dans le réceptacle (40).

11. Procédé pour charger un réceptacle avec des tracteurs agricoles suivant l'une des revendications précédentes, caractérisé en ce que la roue auxiliaire (42) pouvant pivoter horizontalement peut être démontée du tracteur agricole (10) déposé dans le réceptacle (40).

FIG. 1

FIG. 2

FIG.3

FIG.4